# EUROPÄISCHE PATENTANMELDUNG

(11) **EP 1 970 540 A2**
(43) Veröffentlichungstag der Anmeldung: **17.09.2008**
(21) Anmeldenummer: 07108196.2
(22) Anmeldetag: 15.05.2007
(51) Int. Cl.: F01D 9/02

(54) **Heissgaskanal mit Kanalteiler**

(30) Priorität: 13.03.2007 US 685503
(71) Anmelder: Alstom Technology Ltd, 5400 Baden (CH)
(72) Erfinder: Maurell, Orestes J., West Palm Beach, 33412 (US); Jones, Russell Bond, Jupiter, FL 33458 (US); Duggans, Marion, West Palm Beach, FL 33409 (US); Kolev, Sejko, 5242, Birr (CH)

(57) **Zusammenfassung**

Ein Heißgaskanal 54, wie etwa ein Verbrennungsgehäuse in einem Gasturbinenmotor, weist einen Kanalteiler 62 auf, der innerhalb des Heißgaskanals an mindestens drei, vorzugsweise vier, Einbaustellen, die um einen äußeren Rand des Kanalteilers angeordnet sind, festgehalten wird. Mindestens eine, vorzugsweise zwei der Befestigungsstellen weisen jeweils eine im Allgemeinen zylindrische Halterung 701, 711 auf, die durch eine Wand des Heißgaskanals ragt, um einen Randteilbereich des Kanalteilers 62 mittels einer Nut 771, die in einer kreisförmigen Fläche der Halterung gebildet ist, aufzunehmen. Sich gegenseitig berührende Flächen der Nut und des Kanalteilers weisen Hartschweißbeschichtungen 102, 103 auf, um Verschleiß aufgrund von Vibrationen und unterschiedlicher thermischer Ausdehnung und Schrumpfung zu bekämpfen. Die Halterungen 701, 711 weisen Kühlungsbohrungen 104, 106 auf, die die Halterung derart durchdringen, dass Kühlmittel durch die Halterungen und in das Innere des Heißgaskanals strömen kann, um die Halterungen und die Hartschweißbeschichtungen zu kühlen.

## Beschreibung

### Gebiet der Erfindung

Die vorliegende Erfindung betrifft eine verbesserte Kanalteileranordnung in einem Heißgaskanal, wie etwa ein Verbrennungsgehäuse für einen Gasturbinenmotor. Die Erfindung betrifft ferner ein Verfahren zum Herstellen oder Nachrüsten der Kanalteileranordnung.

### Allgemeiner Stand der Technik

In Axialgasturbinenmotoren der Art, in der sich die Hauptachse der Brennkammer(n) von dem Hauptgehäuse des Motors nach außen erstreckt, z.B. senkrecht zu der Rotationsachse des Motors, ist es notwendig, ein Leitungssystem bereitzustellen, um die Verbrennungsgase von der Richtung, in der sie die Brennkammer verlassen, in eine axiale Richtung zum Eintritt in die Turbine umzulenken. Eine solche Heißgasdurchführung erstreckt sich ebenfalls um den Motor in Form eines so genannten "Verbrennungsgehäuses", um die Verbrennungsgase gleichmäßig um den ringförmigen Einlass der Turbine zu verteilen. Um eine solche Verteilung zu bewirken, ist das Verbrennungsgehäuse angeordnet, um die von der Brennkammer abströmenden Gase in zwei Ströme zu teilen, die sich um den Motor herum erstrecken. Ein Strom fließt gegen den Uhrzeigersinn um das Verbrennungsgehäuse und der andere fließt im Uhrzeigersinn. Um zu verhindern, dass die zwei Verbrennungsgasströme frontal am Boden des Verbrennungsgehäuses aufeinander prallen, wird eine Absperrung, bekannt als Kanalteiler, bereitgestellt, da ansonsten übermäßiges Stoßen und Turbulenzen in die Turbine einfließen würden. Allerdings setzen die gegenläufigen Ströme den Teiler Biege- und Rüttelbelastungen aus, und verursachen dadurch Reibrost und Verschleißprobleme in den Halterungen, wie später ausführlicher beschrieben wird. Die vorliegende Erfindung wurde entwickelt, um diese Anliegen zu verbessern.

### Kurzdarstellung der Erfindung

Die vorliegende Erfindung weist folglich einen Kanalteiler auf, der an drei oder mehr Einbaustellen in einem Heißgaskanal festgehalten wird, der um einen äußeren Rand des Kanalteilers beabstandet ist, wobei mindestens eine der Einbaustellen eine Halterung aufweist, die durch eine Wand des Heißgaskanals ragt, um den Kanalteiler festzuhalten, wobei die Halterung eine Nut in sich aufweist, und ein Randbereichteil des Kanalteilers in der Nut festgehalten wird, wobei sich gegenseitig berührende Oberflächen der Nut und des Kanalteilers Hartschweißbeschichtungen aufweisen und die Halterung mit Kühlungsöffnungen bereitgestellt wird, die die Halterung derart durchbrechen, dass im Betrieb Kühlmittel durch die Halterungen und in das Innere des Heißgaskanals strömen kann, um die Halterungen und die Hartstoffbeschichtungen zu kühlen.

Vorzugsweise ragen mindestens zwei Halterungen durch die Wand des Heißgaskanals, um entsprechende Randteilbereiche des Kanalteilers aufzunehmen. Dies stellt eine höhere Stabilität für den Kanalteiler bereit. Die andere/anderen Einbaustelle/Einbaustellen, an der/denen der Rand des Kanalteilers festgehalten wird, kann/können eine Aufnahme des Rands des Kanalteilers mit Randbefestigungsmitteln an der Kanalwand aufweisen. Eine solche Aufnahme kann das Durchdringen der Kanalwand durch mindestens einen hervorstehenden Randteilbereich des Teilers aufweisen, um in ein Befestigungsmerkmal an der Außenseite der Kanalwand einzugreifen.

Um eine Schweißfertigung des Heißgaskanals und nachfolgende Behandlung durch Lösungsglühen der Schweißnähte vor der Befestigung der Halterung(en) zu erlauben, wird jede dieser Halterungen nicht direkt an der Wand des Heißgaskanals befestigt, sondern wird in einer Buchse festgehalten, die in die Kanalwand geschweißt wird, bevor die Behandlung des Lösungsglühens stattgefunden hat. Die Anordnung ist derart, dass die Halterung innerhalb der Buchse befestigt wird, indem der äußere Umfang der Halterung an den inneren Umfang der Buchse an eine Stelle geschweißt wird, die sich außerhalb der Heißgaskanalwand befindet. Dies schützt die Schweißnaht vor hohen Temperaturen innerhalb des Kanals und erleichtert zukünftiges Entfernen und Ersetzten der Halterung durch Zerspanen der Schweißnaht und Wiederverschweißen einer neuen Halterung in der vorhandenen Buchse.

In der bevorzugten Ausführungsform weist der Heißgaskanal ein Verbrennungsgehäuse in einem Gasturbinenmotor auf.

Ferner weist in der bevorzugten Ausführungsform ein Teil der Heißgaskanalwand eine Platte auf, die die Halterung(en) aufnimmt, wobei die Platte in eine entsprechend geformte Öffnung in der Heißgaskanalwand eingeschweißt ist. Dies ist ein Vorteil, da es die Nachrüstung von neuen Kanalteileranordnungen in alten Gasturbinenmotoren erleichtert, und da Abmessungen der Platte gewählt werden können, um die Schweißanordnung relativ zu den vorhandenen Schweißnähten in der angefertigten Kanalwand zu optimieren.

In zusätzlichen Gesichtspunkten stellt die Erfindung ein Verfahren zur Herstellung eines Verbrennungsgehäuses eines Gasturbinenmotors mit einem Kanalteiler und ein Verfahren zur Nachrüstung eines Gasturbinenmotors, um einen Kanalteiler zu ersetzen, der sich in einem Verbrennungsgehäuse des Gasturbinenmotors befindet, bereit.

Weitere Gesichtspunkte der Erfindung werden deutlich werden bei Durchsicht der folgenden Beschreibung und Ansprüche.

### Kurzbeschreibung der Zeichnungen

Beispielhafte Ausführungsformen werden nun mit Bezug auf die begleitenden Zeichnungen beschrieben, wobei:
Figur 1A ist eine vereinfachte, schematische Teilschnittsansicht einer Anordnung des Stands der Technik, die einen Gasturbinenmotor aufweist, der ein Verbrennungsgehäuse umfasst, das mit einem Kanalteiler ausgerüstet ist;
Figur 1B ist eine Teilansicht der Schnittebene B-B in Figur 1A;
Figur 1C ist eine vergrößerte Ansicht von Schnitt C-C in Figur 1B;
Figur 2A ist eine ausgebrochen dargestellte, perspektivische Ausschnittsansicht der Anordnung des Stands der Technik, die den Kanalteiler aufweist, der in Halterungen in dem Verbrennungsgehäuse festgehalten ist;
Figur 2B ist eine Querschnittsansicht einer Einzelheit der Anordnung des Stands der Technik, die einen Teilbereich der Verbrennungsgehäusewand, eine Halterung und einen Randabschnitt des Kanalteilers des Stands der Technik, der in der Halterung gehalten wird, aufweist, wobei der Schnitt durch einen Durchmesser der Halterung und durch die Dicke des Teilers gemacht wurde;
Figur 2C ist eine Ausschnittsansicht auf Pfeil 2 in Figur 1C, die einen Teilbereich der dem Kompressor zugewandten Seite der Verbrennungsgehäusewand mit Befestigungen für den Kanalteiler aufweist;
Figur 3 ist eine Ansicht ähnlich wie Figur 2B, zeigt jedoch eine Anordnung gemäß der vorliegenden Erfindung;
Figur 4 ist eine ausgebrochen dargestellte, perspektivische Ausschnittsansicht, die einen Teilbereich eines Verbrennungsgehäuses gemäß der vorliegenden Erfindung zeigt, wobei das Gehäuse während der Vorbereitung zur Befestigung des Kanalteilers darin gezeigt wird; und
Figur 5 ist eine ausgebrochen dargestellte, perspektivische Ausschnittsansicht, die einen Teilbereich des Verbrennungsgehäuses von Figur 4 nach der Befestigung der Kanalteilerhalterungen gemäß der vorliegenden Erfindung zeigt.

### Ausführliche Beschreibung der Zeichnungen

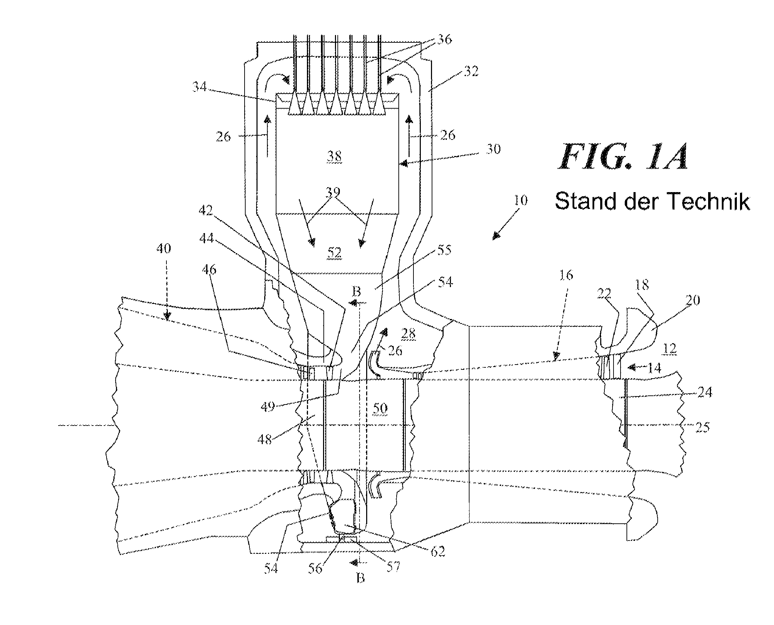

Mit Bezug auf Figur 1A wird eine vereinfachte, schematische Seitenansicht eines Gasturbinenmotors 10 der Bauart gezeigt, die häufig zur Energieerzeugung verwendet wird. Teile der äußeren Gehäuse des Motors wurden ausgebrochen, um Teile der inneren Anordnung des Motors zu zeigen.

Beginnend auf der rechten Seite der Figur 1A hat der Motor 10 einen Lufteinlass 12, von dem nur ein Teilbereich gezeigt wird. Der Einlass 12 leitet die Luft 14 in einen Mehrstufenverdichter 16, von dem jede Stufe eine ringförmige Reihe von Leitschaufeln 18, die an einem feststehenden Verdichtergehäuse 20 befestigt ist, aufweist, gefolgt von einer ringförmigen Reihe von Laufschaufeln 22, die an einer Rotortrommel 24 befestigt ist, die um die Mittelachse 25 des Motors rotiert. Der Verdichter 16 verdichtet die Luft 14 und fördert sie als Hochdruckstrom 26 an eine Druckkammer 28, die einen Mittenbereich des Motorinnenraums umgibt.

Ebenfalls im Mittenbereich des Motors 10 wird eine Brennkammer 30 bereitgestellt, die in einem Brennkammergehäuse 32 eingeschlossen ist. Die Brennkammer 30 ist groß, um dem Motor 10 zu erlauben, eine große Energiemenge zu erzeugen. Deshalb ist, um die Gesamtlänge des Motors zu reduzieren und die Wartung zu erleichtern, die Brennkammer 30 so angeordnet, dass sie sich rechtwinklig zu der Motormittellinie 25 vom Rest des Motors nach außen erstreckt. Druckluft 26 von der Druckkammer 28 strömt daher auf der Innenseite des äußeren Gehäuses 32 der Brennkammer nach oben und tritt in das äußere Ende 34 der Brennkammer 30 ein, wo sie sich mit Kraftstoff in den Einspritzdüsen 36 vermischt. Das Luft-Kraftstoffgemisch verbrennt dann in der Brennkammer 30, um Verbrennungsgase 39 mit hoher Temperatur zu erzeugen, die die mehrstufige Turbine 40 antreiben. Jede Stufe der Turbine weist eine ringförmige Reihe von Leitschaufeln 42 auf, die an einem feststehenden Turbinengehäuse 44 befestigt ist, gefolgt von einer ringförmigen Reihe von Laufschaufeln 46, die an einer Rotortrommel 48 befestigt ist, die um die Mittelachse 25 des Motors rotiert. Am Eintrittsring 49 der Turbine weisen die Leitschaufeln 42 Einlassschaufeln auf. Die Energie, die durch die Turbine 40 entwickelt wird, kann an einen Generator (nicht gezeigt) über eine Welle (nicht gezeigt), die durch den Turbinenrotor 48 angetrieben wird, abgegeben werden. Der Turbinenrotor 48 treibt ebenfalls den Verdichterrotor 24 über eine Kupplung (nicht gezeigt) an, die im Innern einer feststehenden Trommel 50 rotiert, die sich zwischen dem Verdichter 16 und der Turbine 40 befindet.

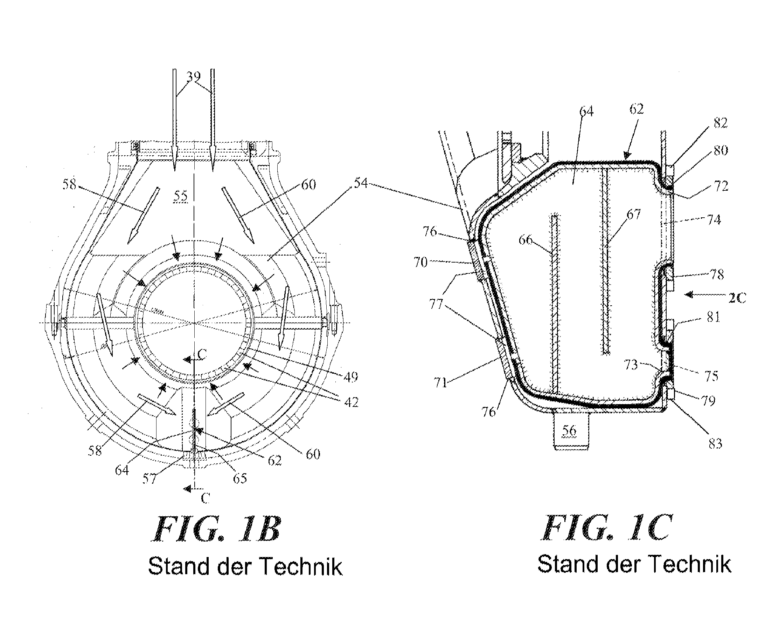

Um die Verbrennungsgase 39 von dem sich verengenden Brennkammerauslass 52 an den Turbineneinlass 49 abzuführen, erstreckt sich ein ringförmiger Heißgaskanal oder Verbrennungsgehäuse 54 um benachbarte Teilbereiche der Trommel 50 und der Turbine 40. Wie der Fachmann erkennen wird, müssen die Verbrennungsgase 39, die durch die Brennkammer 30 entwickelt wurden, gleichmäßig um den Turbineneinlass 49 herum verteilt werden, nachdem sie aus dem Brennkammerauslass 52 ausströmen. Dies wird erreicht durch Verbinden des Brennkammerauslasses 52 mit dem ringförmigen Verbrennungsgehäuse 54 über einen Kanalteilbereich 55, der sich in radialer Richtung verengt, aber sich um das Verbrennungsgehäuse herum aufweitet. Diese Anordnung ist wirksam, um die Verbrennungsgase 39 umlaufend in das Verbrennungsgehäuse 54 zu zerstreuen. Wie in Figur 1A gesehen werden kann, hat das Verbrennungsgehäuse 54, in einer radialen/axialen Schnittebene gesehen, in Richtung des Turbineneinlasses 49 ein zusammenlaufendes Profil. Das Verbrennungsgehäuse 54 trichtert dabei die Verbrennungsgase 39 in den Turbineneintrittsring 49, indem die Stromrichtung der Verbrennungsgase 39 allmählich von einer radial nach innen laufenden Richtung in eine axiale Richtung in den Turbineneingangsring 49 abgelenkt wird. Der Verbrennungsgasstrom ist ebenfalls in der Figur 1B dargestellt, welche eine Ansicht auf Schnitt B-B in Figur 1A ist. Hier wird ersichtlich, dass wenn die Verbrennungsgase 39 in das Verbrennungsgehäuse 54 von dem ringsum verteilenden Kanalteilbereich 55 eintreten, diese sich in zwei Ströme 58, 60 teilen und um den ringförmigen Umfang des Verbrennungsgehäuses 54 verteilt werden und gleichzeitig in den Turbineneinlass 49 eintreten, wie durch die kurzen Strompfeile, die nach innen zeigen, dargestellt.

Der Boden des Verbrennungsgehäuses 54, d.h. der Teilbereich diametral entgegengesetzt zu Brennkammerauslass 52, weist einen daran angeschweißten Zapfen 56 auf, wobei der Zapfen in einer Bohrung in der Bodenplatte 57 aufgenommen wird, die durch Schrauben (nicht gezeigt) an einem äußeren Gehäuse des Motors befestigt ist. Die Zapfen-Bohrung-Anordnung verhindert eine seitliche Bewegung des Verbrennungsgehäuses 54, erlaubt ihm aber, sich aufgrund von thermischer Ausdehnung und Schwindung und Motoreinschaltstößen radial zu bewegen. Zusätzlich wird ein Kanalteiler 62 am Boden des Verbrennungsgehäuses 54 bereitgestellt, um zu verhindern, dass die zwei Verbrennungsgasströme 58, 60 frontal aufeinander prallen, was ansonsten verursachen würde, dass übermäßiges Stoßen und Turbulenzen in die Turbine einfließt. Allerdings setzen die gegenläufigen Ströme 58, 60 den Teiler 62 Biege- und Rüttelbelastungen aus und verursachen dadurch Reibrost und Verschleißprobleme, wie nachfolgend ausführlich beschrieben wird.

Figur 1C zeigt den Kanalteiler 62 ausführlicher und weist eine vergrößerte, geschnittene Seitenansicht des Teilers auf, der sich in dem Verbrennungsgehäuse 54 befindet, wobei der Schnitt entlang der Ebene C-C in Figur 1B ausgeführt wurde. Der Teiler 62 weist eine Blechbauweise auf, in welcher die sich gegenüberstehenden Verkleidungen 64, 65 um ihre Ränder und ebenfalls mittels der Schweißstreben 66, 67 zusammengeschweißt sind, und dadurch die Verkleidungen gegen übermäßiges Verbiegen und Vibrationen durch die gegenläufigen Verbrennungsgasströme 58, 60, welche die Verkleidung 64 beziehungsweise Verkleidung 65 beaufschlagen, versteifen.

Der Teiler 62 wird in dem Verbrennungsgehäuse 54 an vier Einbaustellen festgehalten, welche gleichmäßig um den Umfang des Kanalteilers beabstandet sind. Eine Dreipunktanordnung könnte denkbarerweise zweckmäßig sein, aber mehr als drei Aufnahmepunkte werden bevorzugt, um eine erhöhte Stabilität des Teilers gegen die Gaskräfte zu erreichen. Im vorliegenden Falle wird der Teiler durch zwei so genannte "Passformen" oder Halterungen 70, 71 in der der Turbine zugewandten Seite des Verbrennungsgehäuses 54 ausgerichtet und ebenfalls durch zwei Lappen oder Auskragungen 72, 73, welche durch entsprechende Öffnungen 74, 75 in der dem Verdichter zugewandten Seite hindurchragen, um in die Haltemerkmale in der Form der Rahmen 78, 79, 82, 83 einzugreifen.

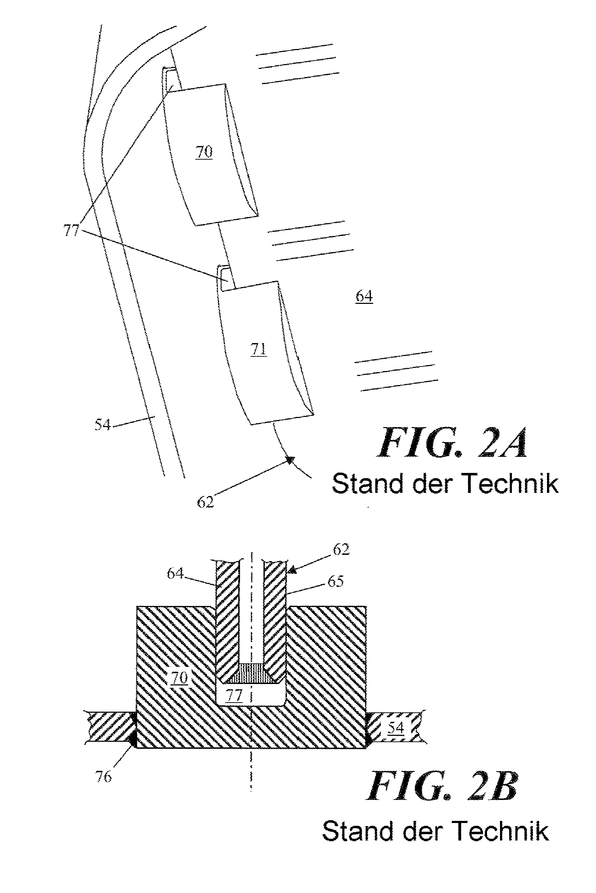

Wie am besten aus der ausgebrochen dargestellten, perspektivischen Ausschnittsansicht von Figur 2A und der geschnittenen Ausschnittsansicht von Figur 2B ersichtlich wird, weisen die Halterungen 70, 71 kurze Zylinder auf, die in Bohrungen der Verbrennungsgehäusewand eingeschweißt sind. Die Schweißnähte 76, die die Halterungen 70, 71 an der Wand des Verbrennungsgehäuses 54 befestigen, sind in Figur 2B dargestellt. Die Halterungen 70, 71 haben tiefe Schlitze oder Nuten 77, die quer über deren Durchmesser eingeschnitten sind, um passende Randteilbereiche der Teiler 62 in einer engen Passung, jedoch nicht in einer Presspassung, aufzunehmen.

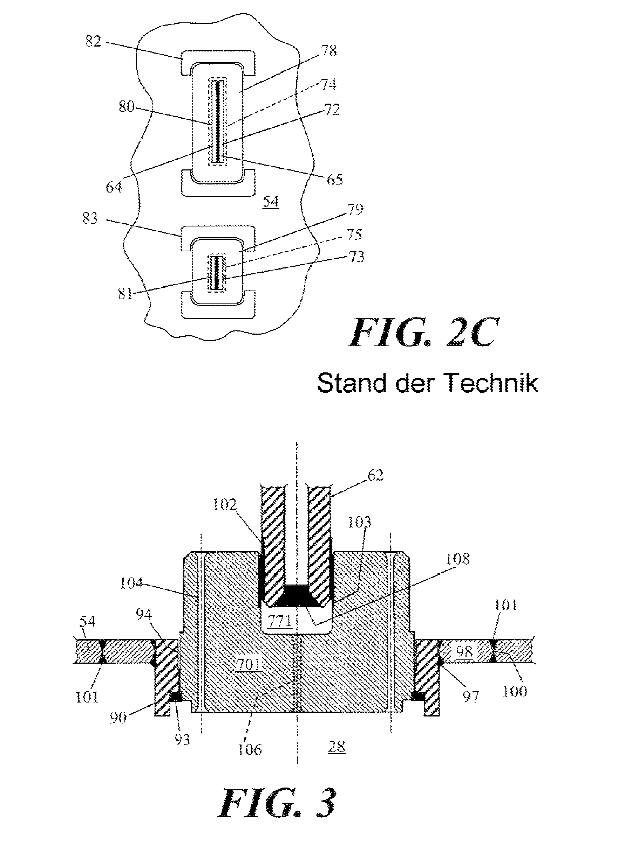

Hinsichtlich der Auskragungen 72, 73 am Rand des Teilers 62, sollte auf die Figuren 1C und 2C Bezug genommen werden, wobei die letztere Figur eine Ansicht auf Pfeil 2C in Figur 1C ist. Hier wird ersichtlich, dass die Öffnungen 74, 75 in der dem Verdichter zugewandten Seite des Verbrennungsgehäuses 54 überdimensioniert sind, um die Lappen 72, 73, die in die entsprechenden Nuten 80, 81 in den Rahmen 78, 79 eingeschweißt sind, aufzunehmen. Die Rahmen 78, 79 dürfen sich etwas über die äußere Fläche des Verbrennungsgehäuses innerhalb von Grenzen hinausbewegen, die durch die äußeren Teilrahmen 82, 83, die an dem Verbrennungsgehäuse angeschweißt sind, festgelegt werden. Verschleißschutzbeschichtungen (nicht gezeigt) können, falls erforderlich, zwischen den Rahmen 78, 79 und der Verbrennungsgehäusewand aufgetragen werden. Innerhalb der Grenzen, die durch die äußeren Teilrahmen 82, 83 bereitgestellt werden (welche kleiner sind als die Grenzen, die die Öffnungen 74, 75 bereitstellen würden), erlaubt diese Konstruktion mehrere Freiheitsgrade für thermische Ausdehnung und Schwindung des Kanalteilers 62 relativ zu dem Verbrennungsgehäuse 54.

Obwohl die obenstehende Bauweise des Teilers 62 und seine Befestigungen in dem Verbrennungsgehäuse 54 angemessen arbeitet, neigt Reibrost im Langzeitbetrieb aufzutreten, wo die Randteilbereiche des Teilers 62 in den Nuten 77 der Halterungen 70, 71 aufgenommen werden. Es ist nicht wünschenswert, den Teiler innerhalb des Verbrennungsgehäuses 54 fest zu verschweißen, um dieses Problem zu überwinden, da eine Toleranzzugabe für relative thermische Ausdehnung und Schwindung des Verbrennungsgehäuses und des Teilers gegeben werden muss. Da dem so ist, wäre die Anwendung einer Aufschweißlegierung, wie etwa Stellite (Eingetragenes Warenzeichen) auf den Oberflächen der Anschlussteile wünschenswert als ein kostengünstiges Mittel, um Verschleiß aufgrund von Reibrost der Berührungsflächen zu bekämpfen. Dies wurde bisher als nicht machbar angesehen, da:
die Aufschweißlegierung beschädigt werden würde aufgrund der Einwirkung der hohen Gastemperaturen, die innerhalb des Verbrennungsgehäuses 54 wahrgenommen werden;
es nach dem Zusammenschweißen der Teile des Verbrennungsgehäuses 54 während der Herstellung notwendig ist, die Schweißnähte in dem Verbrennungsgehäuse, die den heißen Verbrennungsgasen ausgesetzt sind, durch Lösungsglühen zu behandeln, und
dies ebenfalls die Aufschweißlegierung beschädigen würde.

### Merkmale der dargestellten Ausführungsform der Erfindung

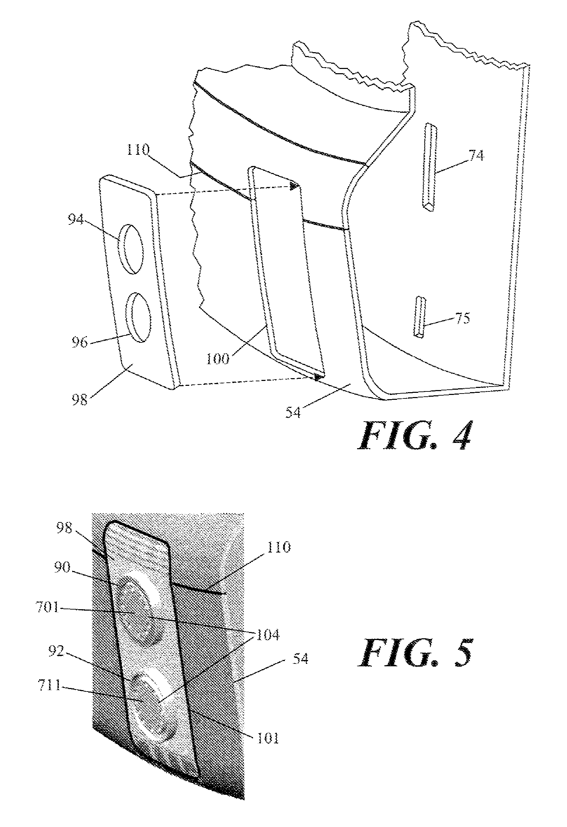

Die vorliegende Erfindung wurde entwickelt, um die oben genannten Probleme zu überwinden oder zu reduzieren. Eine Ausführungsform der Erfindung wird mit Bezug auf die Figuren 3 bis 5 dargestellt.

Die Ausführungsform weist eine Kombination von Merkmalen wie folgt auf:
• Wie bereits beschrieben, wurden die zylindrischen Halterungen 70, 71 direkt in Bohrungen in der Seite des Verbrennungsgehäuses 54 eingeschweißt. In der vorliegenden Ausführungsform allerdings sind geänderte, im Allgemeinen zylindrische Halterungen 701, 711 in entsprechenden Buchsen 90, 92 durch Rundschweißnähte 93 befestigt. Die Schweißnähte 93 befinden sich außerhalb des Verbrennungsgehäuses 54 und sind deshalb der relativ kühlen Druckluft in der Druckkammer 28 (siehe auch Figur 1A) ausgesetzt. Außerdem sind die Bohrungen 94, 96 in einer im Allgemeinen rechteckigen Platte 98 bereitgestellt und die Buchsen 90, 92 sind in den Bohrungen 94, 96 durch Rundschweißnähte 97 befestigt. Die Platte 98 ist in einer passenden Öffnung 100 in dem Verbrennungsgehäuse 54 durch die rechteckige Schweißnaht 101 eingeschweißt. Es wird aus dem Obengenannten ersichtlich, dass obwohl die Halterungen 701, 711 derart durch die Bohrungen 94, 96 in der Platte 98 ragen, dass deren diametrische Nuten 771 den Rand des Teilers 62 aufnehmen, die Halterungen 701, 711 nicht direkt an das Verbrennungsgehäuse geschweißt sind.
• Um das Reibrostproblem zu bekämpfen, ist Stellite (vorzugsweise) oder anderes geeignetes Hartschweißmaterial aufgetragen (z.B. durch Benutzen eines schlechthin bekannten Hartschweißverfahrens), um die Beschichtungen 102, beziehungsweise 103 auf den sich berührenden Randflächen des Teilers 62 und der Nuten 771 in den Halterungen 701, 711 zu erzeugen.
• Um die Betriebstemperatur der Hartschweißbeschichtungen 102, 103, die im Betrieb den inneren Temperaturen des Verbrennungsgehäuses 54 ausgesetzt sind, zu reduzieren, sind die Halterungen 701, 711 mit Kühlungsbohrungen 104 bereitgestellt, die die Halterungen längsgerichtet derart durchdringen, dass die Verdichterluft von der Druckkammer 28 durch die Halterungen und in das Innere des Verbrennungsgehäuses 54 strömen kann und dadurch die Grundkörper der Halterungen kühlt. Die Innenseite der Nuten 771 kann ebenfalls, falls erforderlich, durch die Kühlungsbohrungen 106, die sich durch die Halterungen 701, 711 erstrecken, um Kühlungsluft zu erlauben, von der Druckkammer 28 in den Boden der Nuten 771 zu strömen, gekühlt werden.

### Herstellverfahren für die dargestellte Ausführungsform

Während der Fertigung des Verbrennungsgehäuses 54 werden die Öffnungen 74, 75 (siehe auch Figuren 1C und 2C) in die dem Verdichter zugewandten Seite des Verbrennungsgehäuses eingearbeitet und die äußeren Teilrahmen 82, 83 werden um die Öffnungen 74, 75 angeschweißt. Eine geeignete Öffnung 100 wird ebenfalls in die der Turbine zugewandten Seite des Verbrennungsgehäuses 54 eingearbeitet, um die Platte 98 aufzunehmen, die die Buchsen 90, 92 aufnimmt. Die Platte 98 wird vorgeformt, um mit den Umrissen des Verbrennungsgehäuses 54 übereinzustimmen und wird in die Öffnung 100 entlang der Schweißlinie 101 eingeschweißt. Die Bohrungen 94, 96 für die Halterungen 701, 711 können in die Platte 98 entweder bevor oder nachdem die Platte in dem Verbrennungsgehäuse 54 befestigt wird eingearbeitet werden. In dem vorherigen Fall ist es optional, ob die Buchsen 90, 92 in ihre entsprechenden Bohrungen 94, 96 eingeschweißt werden bevor oder nachdem die Platte 98 in dem Verbrennungsgehäuse 54 befestigt wird. In diesem Stadium sind die Schweißnähte 97, 101 und andere Schweißnähte, wie etwa die Liniennaht 110, die während der Fertigung des Verbrennungsgehäuses 54 notwendig waren, wie bekannt durch Lösungsglühen behandelt, um die Eigenschaften des Materials (z.B. hitzebeständiges, hochlegiertes Stahlblech), aus dem das Verbrennungsgehäuse hergestellt ist, wieder herzustellen.

Es gibt einen zweifachen Vorteil, wenn eine Öffnung 100 in die Wand des Verbrennungsgehäuses 54 bearbeitet wird und dann die Platte 98 in die Öffnung geschweißt wird.

Erstens erfolgt die Fertigung der aufwendigen Form des Verbrennungsgehäuses derart, dass die Schweißnähte 97, durch welche die äußeren Umfänge der Buchsen 90, 92 an der Verbrennungsgehäusewand befestigt sind, sehr wahrscheinlich die Liniennähte, wie etwa Liniennaht 110, überlappen, die sich um das Verbrennungsgehäuse herum erstrecken, um unterschiedliche, sich rundum erstreckende Teilbereiche der Verbrennungsgehäusewand, miteinander zu verbinden. Dies ist nicht wünschenswert, da solche sich seitlich überlappenden Schweißnähte eine relativ große Menge an Schweißmaterial erzeugen, das zweimal geschmolzen wurde. Die Abmessungen der Platte 98 können allerdings derart gewählt werden, dass die Schweißlinie 101 um den äußeren Umfang der Platte die Liniennähte rechtwinklig kreuzt, anstatt sie zu überlappen. Schweißnähte, die sich auf diese Weise kreuzen haben kleinere Flächen von zweifach geschmolzenem Material und haben deshalb bessere Eigenschaften nach der Behandlung durch Lösungsglühen.

Zweitens können, wenn Kanalteileranordnungen von vorhandenen Gasturbinen repariert, nachgearbeitet, oder nachgerüstet werden, die alten Halterungen 70, 71 zusammen mit dem erforderlichen Teilbereich der Verbrennungsgaswand ausgeschnitten werden, um die Öffnung 100 zur Aufnahme der neuen Platte 98 herzustellen.

Mittlerweile wurden die zwei Blechplatten, die den Teiler 62 bilden, eingebaut und um ihre Ränder entlang der Schweißlinie 108 und entlang der Schweißstreben 66, 67 (siehe Figur 1C) verschweißt. Um Reibrost zwischen den Rändern des Teilers 62 und dem Verbrennungsgehäuse 54 zu minimieren, wird der Teiler sorgfältig dimensioniert, damit, wenn er in das Verbrennungsgehäuse eingebaut wird, seine Räder freigängig von der inneren Oberfläche des Verbrennungsgehäuses sind. Nach der Fertigung des Teilers 62 werden die Hartschweißbeschichtungen 102 auf die Berührungsflächen aufgetragen, die in die Nuten 771 in den Halterungen 701, 711 eingreifen. Auf ähnliche Weise werden, nachdem die Halterungen 701, 711 in ihre endgültige Form bearbeitet wurden, einschließlich ihrer diametrischer Nuten 771 und ihrer Kühlungsbohrungen 104, 106, die Hartschweißbeschichtungen 103 auf ihre den Teiler berührenden Flächen aufgetragen.

Das Auftragen der Hartschweißbeschichtungen auf die Randbereiche des Teilers erfordert, dass über Bereichen der Teileroberfläche, die etwas größer sind als die Randbereiche, die tatsächlich die Halterungen 701, 711 berühren, die Teileroberfläche auf eine Tiefe von (z.B.) 0,5 mm unterhalb der ursprünglichen Oberfläche abgeschliffen werden. Sie wird dann, indem ein bekanntes Verfahren zum Hartschweißbeschichten benutzt wird, auf eine Dicke von (z.B.) 2 mm aufgebaut, dann auf z.B. auf eine Dicke von einem Millimeter derart abgeschliffen, dass die fertige Hartschweißbeschichtung um z.B. 0,5 mm über der ursprünglichen Teileroberfläche angehoben ist. Auf ähnliche Weise werden die Berührungsflächen der Nuten 771 auf unterhalb ihrer ursprünglichen Nutenoberfläche abgeschliffen, aufgefüllt, indem das bekannte Auftragsschweißverfahren benutzt wird, und dann wird der Hartschweißauftrag abgeschliffen, um eine Hartschweißbeschichtung zu erreichen, die geringfügig über der ursprünglichen Nutenoberfläche übersteht. Es wird jedoch Acht gegeben, dass sich das Flächenschleifen und der Prozess der Hartschweißbeschichtung in der Nut 771 nicht bis auf den Boden der Nut erstrecken, da es wichtig ist, die Hartschweißbeschichtung 103 von Kerbspannungen fern zu halten.

Nach der Behandlung des Lösungsglühens des Verbrennungsgehäuses 54 (die Schweißnähte 97, die die Buchsen 701, 711 an der Platte 98 befestigen und die Schweißnaht 101, die die Platte mit der Verbrennungsgehäusewand verbindet, umfassend) wird der Teiler 62 in das Verbrennungsgehäuse derart eingebaut, dass die Lappen 72, 73 (Figuren 1C und 2C) auf dem Teiler durch die Schlitzöffnungen 74, 75 ragen und in ihre Rahmen 78, 79 auf der dem Verdichter zugewandten ("kühlen") Seite des Verbrennungsgehäuses eingeschweißt werden. Wenn der Teiler 62 korrekt angeordnet ist, werden die Halterungen 701, 711 in die Buchsen 90, 92 auf der der Turbine zugewandten Seite des Verbrennungsgehäuses derart eingefügt, dass sie den Rand des Teilers aufnehmen, wie in Figur 3 gezeigt. Schließlich werden die Halterungen 701, 711 in ihren entsprechenden Buchsen 90, 92 durch die Rundschweißnähte 93 befestigt.

Wie vorangehend erwähnt, ist vorgesehen, dass die Erfindung von Bedeutung für das Nachrüsten von Gasturbinen mit neuen Kanalteilern ist, wenn der Austausch eines alten, verschlissenen oder beschädigten Kanalteilers 62 erforderlich ist. Ein solcher Arbeitsvorgang erfordert zunächst, dass die Randteilbereiche des vorhandenen Kanalteilers von den Ausrichtmerkmalen des Verbrennungsgehäuses 54 gelöst werden, was nicht nur das Freisetzen der Lappen 72, 73 des Kanalteilers von deren Rahmen 78, 79, z.B. durch eine Fräs- oder Reiboperation, umfasst, sondern auch das Ausschneiden eines Teils der Wand des Verbrennungsgehäuses, zusammen mit den vorhandenen Halterungen 70, 71. Das Ziel des Entfernens des Wandteilbereichs ist, eine Öffnung 100 in der Wand des Verbrennungsgehäuses zu hinterlassen, die dieselbe Form und Größe hat wie die neue, vorgeformte Platte 98, die eingesetzt werden muss. Die neue Platte 98 kann dann eingeschweißt werden, wobei entweder die Bohrungen 94, 96 in die Platte 98 eingearbeitet und die Buchsen 90, 92 in die Bohrungen 94, 96 eingeschweißt werden, bevor oder nachdem die Platte 98 in die Öffnung 100 eingeschweißt wird.

Die letzten verbleibenden Schritte der Kanalteilerreparatur oder des Nachbearbeitungsprozesses folgen denjenigen, auf die vorangehend für eine Neufertigung hingewiesen wurde, d.h. nach der Behandlung des Lösungsglühens der Teile, die neue Schweißnähte umfassen, einschließlich der Schweißnähte 97 und 101, werden der vorausgehend hergestellte Teiler 62 und seine Halterungen 701, 711, auf denen die Hartschweißbeschichtungen 102, 103 schon aufgetragen sind, in das Verbrennungsgehäuse eingebaut und die Halterungen werden in die Buchsen 90, 92 eingeschweißt.

Obwohl die obenstehende Beschreibung auf Schweißen abgezielt hat, um die Buchsen 90, 92 und die Rahmen 82, 83 an der Kanalwand und die Halterungen 701, 711 an den Buchsen zu befestigen, kann es möglich sein, mechanische Befestigungsverfahren, wie etwa Hartlöten bei hoher Temperatur oder sogar Schraubverbindungen einzusetzen. Allerdings würden solche mechanischen Befestigungsverfahren umfangreiches Testen erfordern, um einen gefahrenfreien Betrieb in einer Gasturbinenumgebung sicherzustellen.

Die vorliegende Erfindung wurde obenstehend rein durch Beispiele beschrieben und Abänderungen können innerhalb des Umfangs der beanspruchten Erfindung gemacht werden. Die Erfindung umfasst ebenfalls jedes einzelne Merkmal, das hier beschrieben oder eingeschlossen oder gezeigt oder in den Zeichnungen gezeigt oder eingeschlossen wurde oder jede Kombination von jedem solcher Merkmale oder Verallgemeinerung von jedem solcher Merkmale oder jede Kombination, die sich auf dazu Entsprechenden erstreckt. Daher sollte die Breite und der Umfang der vorliegenden Erfindung durch keine der obenstehend beschriebenen beispielhaften Ausführungsformen eingeschränkt werden. Jedes Merkmal, das in der Beschreibung offenbart wird, einschließlich der Ansprüche und Zeichnungen, kann durch alternative Merkmale, die denselben, gleichbedeutenden oder ähnlichen Zwecken dienen, ersetzt werden, sofern nicht ausdrücklich anders angegeben.

Jegliche Erörterung des Stands der Technik durch die gesamte Beschreibung hindurch ist kein Zugeständnis, dass ein solcher Stand der Technik weithin bekannt ist oder Teil des Allgemeinwissens auf dem Gebiet darstellt.

Sofern der Zusammenhang nicht deutlich anders erfordert, sind durch die Beschreibung und die Ansprüche hindurch die Wörter "aufweisen", "aufweisend" und dergleichen in einem einschließenden, im Gegensatz zu einem ausschließenden oder erschöpfenden Sinne, auszulegen; das heißt, in dem Sinne von "einschließend, aber nicht beschränkt auf".

### Liste der Zeichnungs-Bezugnummern

- 10: Gasturbinenmotor
- 12: Lufteinlass
- 14: Luft
- 16: Mehrstufenverdichter
- 18: ringförmige Reihe von Leitschaufeln
- 20: feststehendes Verdichtergehäuse
- 22: ringförmige Reihe von Laufschaufeln
- 24: Rotortrommel
- 25: Motormittelachse
- 26: Hochdruckstrom
- 28: Druckkammer
- 30: Brennkammer
- 32: Brennkammergehäuse
- 34: äußeres Ende der Brennkammer
- 36: Kraftstoffeinspritzdüsen
- 38: Verbrennungsraum
- 39: Verbrennungsgase
- 40: Mehrstufenturbine
- 42: ringförmige Reihe von Leitschaufeln
- 44: feststehendes Turbinengehäuse
- 46: ringförmige Reihe von Laufschaufeln
- 48: Rotortrommel
- 49: Turbineneingangsring
- 50: feststehende Trommel
- 52: Brennkammerauslass
- 54: Verbrennungsgehäuse
- 55: Kanalteilbereich
- 58, 60: gegenläufige Ströme von Verbrennungsgasen
- 56: Zapfen
- 57: Bodenplatte
- 62: Kanalteiler
- 64, 65: Verkleidung des Kanalteilers
- 66, 67: Schweißstreben
- 70, 71: Kanalteiler-Halterungen
- 72,73: Auskragungen auf Kanalteiler
- 74, 75: Öffnungen auf der dem Verdichter zugewandten Seite des Verbrennungsgehäuses
- 78, 79, 82, 83: Halterahmen
- 76: Schweißnähte
- 77: Nuten in Halterungen
- 80, 81: Schlitze in Halterahmen
- 701, 711: abgeänderte Halterungen
- 90, 92: Buchsen
- 93: Rundschweißnähte
- 94, 96: Bohrungen
- 98: Platte (Wandteilbereich des Verbrennungsgehäuses)
- 97: Rundschweißnähte
- 100: Öffnung in Verbrennungsgehäuse
- 101: rechteckige Schweißnaht
- 771: Nuten in abgeänderten Halterungen
- 102, 103: Hartschweißbeschichtungen
- 104, 106: Kühlungsbohrungen in Halterungen
- 108: Schweißline um den Teiler
- 110: Schweißnaht

## Patentansprüche

1. Heißgaskanal, einen Kanalteiler umfassend, der innerhalb des Heißgaskanals an mindestens drei Einbaustellen festgehalten ist, die um einen äußeren Rand des Kanalteilers verteilt sind, wobei mindestens eine der Einbaustellen eine Halterung aufweist, die durch eine Wand des Heißgaskanals ragt, um den Kanalteiler aufzunehmen, wobei die Halterung eine Nut in sich aufweist und ein Randteilbereich des Kanalteilers in der Nut festgehalten ist, wobei sich gegenseitig berührende Flächen der Nut und des Kanalteilers Hartschweißbeschichtungen aufweisen und die Halterung Kühlungsbohrungen hat, die die Halterung durchdringen, wodurch während der Benutzung Kühlmittel von einer Kühlmittelquelle durch die Halterungen und in das Innere des Heißgaskanals strömen kann, um die Halterungen und die Hartschweißbeschichtungen zu kühlen.

2. Heißgaskanal nach Anspruch 1, wobei mindestens zwei Halterungen durch eine Wand des Heißgaskanals ragen, um entsprechende Randteilbereiche des Kanalteilers aufzunehmen.

3. Heißgaskanal nach Anspruch 1, wobei mindestens eine Stelle, an der der Kanalteiler festgehalten ist, eine Aufnahme des Rands des Kanalteilers in Randbefestigungsmittel auf einer Fläche einer Kanalwand aufweist.

4. Heißgaskanal nach Anspruch 3, wobei die Aufnahme das Durchdringen der Kanalwand durch mindestens einen hervorstehenden Randteilbereich des Teilers und Aufnahme in ein Randbefestigungsmerkmal an einer Außenfläche der Kanalwand aufweist.

5. Heißgaskanal nach Anspruch 1, wobei jede Halterung im Innern einer Buchse befestigt ist, die in der Kanalwand befestigt ist.

6. Heißgaskanal nach Anspruch 5, wobei ein äußerer Umfang der Halterung an einem inneren Umfang der Buchse an einer Stelle verschweißt ist, welche außerhalb der Heißgaskanalwand liegt.

7. Heißgaskanal nach Anspruch 5, wobei ein äußerer Umfang der Buchse in die Heißgaskanalwand eingeschweißt ist.

8. Heißgaskanal nach Anspruch 1, wobei ein Teil der Heißgaskanalwand eine Platte aufweist, die mindestens eine Halterung aufnimmt, wobei die Platte innerhalb einer entsprechend ausgeformten Öffnung in der Heißgaskanalwand eingeschweißt ist.

9. Heißgaskanal nach Anspruch 1, wobei der Heißgaskanal ein Verbrennungsgehäuse eines Gasturbinenmotors aufweist.

10. Verfahren zur Herstellung eines Verbrennungsgehäuses eines Gasturbinenmotors, das einen Kanalteiler aufweist, der in mindestens drei Einbaustellenmerkmalen des Verbrennungsgehäuses befestigt ist, wobei die Einbaustellenmerkmale mindestens eine Halterung umfassen, die durch eine Wand des Verbrennungsgehäuses ragt, um einen Randteilbereich des Kanalteilers aufzunehmen, wobei das Verfahren die Schritte aufweist:
(a) Fertigen des Verbrennungsgehäuses aus Teilen von hitzebeständigem Blechmaterial, indem Schweißverbindungen benutzt werden, um Teilbereiche des Blechmaterials miteinander zu verbinden;
(b) Bereitstellen der Einbaustellenmerkmale für das Verbrennungsgehäuse, folgende Schritte umfassend
(i) Bearbeiten einer entsprechenden Bohrung für jede Halterung in einem vorbestimmten Wandteilbereich des Verbrennungsgehäuses, und
(ii) Einschweißen einer Buchse in jede Bohrung;
(c) Behandeln des Verbrennungsgehäuses durch Lösungsglühen, um die Materialeigenschaften wieder herzustellen, die durch Schweißen beeinflusst werden;
(d) genaues Ausrichten des Kanalteilers in dem Verbrennungsgehäuse und Eingreifen des Kanalteilers in die Einbaustellenmerkmale, mit Ausnahme von mindestens einer Halterung;
(e) Einführen einer Halterung in jede Buchse, derart, dass die Halterung durch die Wand des Verbrennungsgehäuses ragt, um einen Randteilbereich des Kanalteilers aufzunehmen;
(f) Befestigen jeder Halterung im Innern ihrer entsprechenden Buchse, indem ein äußerer Umfang der Halterung an einen inneren Umfang der Buchse an einer Stelle geschweißt wird, welche außerhalb des Wandteilbereichs des Verbrennungsgehäuses liegt.

11. Verfahren nach Anspruch 10, wobei der vorbestimmte Wandteilbereich des Verbrennungsgehäuses eine vorgeformte Platte ist, die zunächst getrennt vom Rest des Verbrennungsgehäuses ist und Schritt (b) einen Schritt zum Bearbeiten einer Öffnung in das Verbrennungsgehäuse, von einer Größe und Form, dass die Platte in die Öffnung eingeschweißt werden kann, aufweist.

12. Verfahren nach Anspruch 11, wobei eine entsprechende Bohrung für jede Halterung in die Platte bearbeitet wird, bevor die Platte in die Öffnung geschweißt wird.

13. Verfahren nach Anspruch 12, wobei eine Buchse in jede Bohrung geschweißt wird, bevor die Platte in die Öffnung geschweißt wird.

14. Verfahren nach Anspruch 12, wobei eine Buchse in jede Bohrung geschweißt wird, nachdem die Platte in die Öffnung geschweißt wird.

15. Verfahren nach Anspruch 11, wobei eine entsprechende Bohrung für jede Halterung in die Platte bearbeitet wird, nachdem die Platte in die Öffnung geschweißt wird.

16. Verfahren nach Anspruch 10, wobei in einem Schritt vor dem Schritt (d) eine verschleißfeste Beschichtung auf jeden Randteilbereich des Kanalteilers aufgetragen wird, der von einer Halterung aufgenommen werden wird.

17. Verfahren nach Anspruch 10, wobei in einem Schritt vor dem Schritt (e) eine verschleißfeste Beschichtung auf jeden Teilbereich der mindestens einen Halterung aufgetragen wird, die den Kanalteiler aufnehmen wird.

18. Verfahren zum Nachrüsten eines Gasturbinenmotors, um einen Kanalteiler auszutauschen, der sich in einem Verbrennungsgehäuse des Gasturbinenmotors befindet, die Schritte aufweisend:
(a) Lösen der Randteilbereiche eines vorhandenen Kanalteilers von den Einbaustellenmerkmalen des Verbrennungsgehäuses, das Ausschneiden eines Wandteilbereiches des Verbrennungsgehäuses umfassend, der ein Einbaustellenmerkmal aufweist, das mindestens eine Halterung aufweist, die durch den Wandteilbereich ragt, um einen Randteilbereich des vorhandenen Kanalteilers aufzunehmen;
(b) Entfernen des Wandteilbereiches, um eine Öffnung in dem Verbrennungsgehäuse zu hinterlassen, die dieselbe Größe und Form aufweist, wie eine vorgeformte Platte, die in ihr eingepasst werden muss.
(c) Einschweißen der vorgeformten Platte in die Öffnung;
(d) Schneiden von mindestens einer Bohrung in die Platte und Einschweißen einer Buchse in die Bohrung, entweder bevor oder nachdem die Platte in die Öffnung eingeschweißt wird.
(e) Behandeln der Schweißverbindungen, die in den Schritten (c) und (d) hergestellt wurden, durch Lösungsglühen, um die Materialeigenschaften wieder herzustellen, die durch das Schweißen beeinflusst werden;
(f) genaues Ausrichten eines Austauschkanalteilers in dem Verbrennungsgehäuse und Einführen des Kanalteilers in die Einbaustellenmerkmale, mit Ausnahme von mindestens einer Austauschhalterung;
(g) Einfügen einer Austauschhalterung in die Buchse, derart, dass die Halterung durch die Wand des Verbrennungsgehäuses ragt, um einen Randteilbereich des Kanalteilers aufzunehmen;
(h) Befestigen der Halterung im Innern seiner entsprechenden Buchse durch Verschweißen eines äußeren Umfangs der Halterung an einen inneren Umfang der Buchse, an einer Einbaustelle, die außerhalb der Platte liegt.

19. Verfahren nach Anspruch 18, wobei der Schritt (d) das Schneiden von zwei Bohrungen in die Platte und das Einschweißen einer Buchse in jede Bohrung aufweist.

20. Verfahren nach Anspruch 18, wobei der Schritt (d) das Schneiden der mindestens einen Bohrung in die Platte aufweist, bevor die Platte in die Öffnung eingeschweißt wird.

21. Verfahren nach Anspruch 18, wobei eine Buchse in die Bohrung eingeschweißt wird, bevor die Platte in die Öffnung eingeschweißt wird.

22. Verfahren nach Anspruch 18, wobei eine Buchse in die Bohrung eingeschweißt wird, nachdem die Platte in die Öffnung eingeschweißt wird.

23. Verfahren nach Anspruch 18, wobei in einem Schritt vor dem Schritt (f) eine verschleißfeste Beschichtung auf einen Randteilbereich des Kanalteilers aufgetragen wird, der von der mindestens einen Halterung aufgenommen werden wird.

24. Verfahren nach Anspruch 18, wobei in einem Schritt vor dem Schritt (g) eine verschleißfeste Beschichtung auf jeden Teilbereich der mindestens einen Halterung aufgetragen wird, der den Kanalteiler aufnehmen wird.
